# EUROPEAN PATENT APPLICATION

(11) **EP 2 308 782 A1**
(43) Date of publication of application: **13.04.2011**
(21) Application number: 10186723.2
(22) Date of filing: 06.10.2010
(51) Int. Cl.: B65G 49/06

(54) **System for feeding glass sheets to at least one sheet processing line and production plant comprising this system**

(30) Priority: 06.10.2009 IT TO20090760
(71) Applicant: Bottero S.p.A., 12100 Cuneo (IT)
(72) Inventor: Balbi, Mario, 12100 Cuneo (IT); Boggero, Enrico, 12100 Cuneo (IT)
(74) Representative: Jorio, Paolo

(57) **Abstract**

A system (3) for feeding glass sheets (4) to at least one sheet processing line (6) has a sheet withdrawal station (7), in which are housed stands (9) (10) for supporting packs (13) of sheets and a loading machine (7) mobile in a rectilinear transfer direction (8) to withdraw the sheets from the stands (9) (10) and transfer them to the processing line; the stands (9)(10) being arranged along the transfer direction (8) on opposite sides of the loading machine (7) and having first (9b) and, respectively, second inclined side resting surfaces (10b) of the respective sheet pack facing the loading machine (7) and converging one towards the other and downwards, and being mobile from and towards the withdrawal station (7) under the thrust of a common transfer unit (22).
A production plant for processing glass sheets uses also said system.

## Description

The present invention relates to a system for feeding glass sheets to at least one sheet processing line.

For processing glass sheets it is known to use production plants comprising a sheet processing line adapted to receive, in an inlet thereof, a sequence of glass sheets to be processed, and a system to feed the glass sheets to the cited inlet.

The system comprises a sheet withdrawal station adapted to house a sheet support on which at least one pack of sheets to be processed is rested substantially vertical, and at least one loading machine that can withdraw the sheets from the support in a sequence and feed them to the inlet of the processing line.

The sheets are fed to the withdrawal station in different manners, although always using machineries dedicated to the specific processing line.

Although universally used, the known production plants result being particularly expensive especially due to the fact that a respective sheet feeding system, and therefore a loader and devices to feed the sheets to the withdrawal station, is dedicated to each production line.

Although a dedicated sheet feeding system is associated to each line, the known production plants do not allow a free increase in production. Especially, they are not very flexible with the consequence that it is normally difficult to shift from one type of sheets to another in reasonably short times to obtain different products.

It is the object of the present invention to provide a system for feeding glass sheets, which allows to simply and cost-effectively solve the aforementioned problems.

According to the present invention, there is provided a system for feeding glass sheets to at least one sheet processing line; the system comprising a sheet withdrawal station; the withdrawal station housing support means for the sheets to be withdrawn and a loading machine mobile in a rectilinear transfer direction to withdraw the sheets from the support means and transfer them to the processing line, characterised in that said support means for the sheets comprise at least one first and at least one second mobile stand arranged along said transfer direction on opposite sides of said loading machine; said first and second mobile stand having a first and respectively a second inclined side resting surface of a respective sheet pack; said first and second side resting surfaces facing said loading machine and converging one towards the other and downwards; the system further comprising a storage station for storing mobile stands with sheets thereon and a single transfer unit for transferring said mobile stands between the storage station and said withdrawal station.

Preferably, in the above defined system, said storage station comprises at least one first storage area housing first mobile stands conveniently arranged with the side resting surfaces thereof parallel to said first side resting surface, and at least one second storage area housing second mobile stands conveniently arranged with the side resting surfaces thereof parallel to said second side resting surface.

The invention will now be described with reference to the accompanying drawings, which show some non-limitative embodiments thereof, in which:
figure 1 diagrammatically shows a plan view, substantially in blocks, of a preferred embodiment of a system for feeding glass sheets to a processing line, which is partially shown;
figure 2 is an enlarged section view taken along line II-II of figure 1;
figure 3 shows a plan view of a variant of a detail of the system according to figure 1; and
figure 4 diagrammatically shows a plan view, substantially in blocks, of another preferred embodiment of a system for feeding glass sheets to a plurality of processing lines.

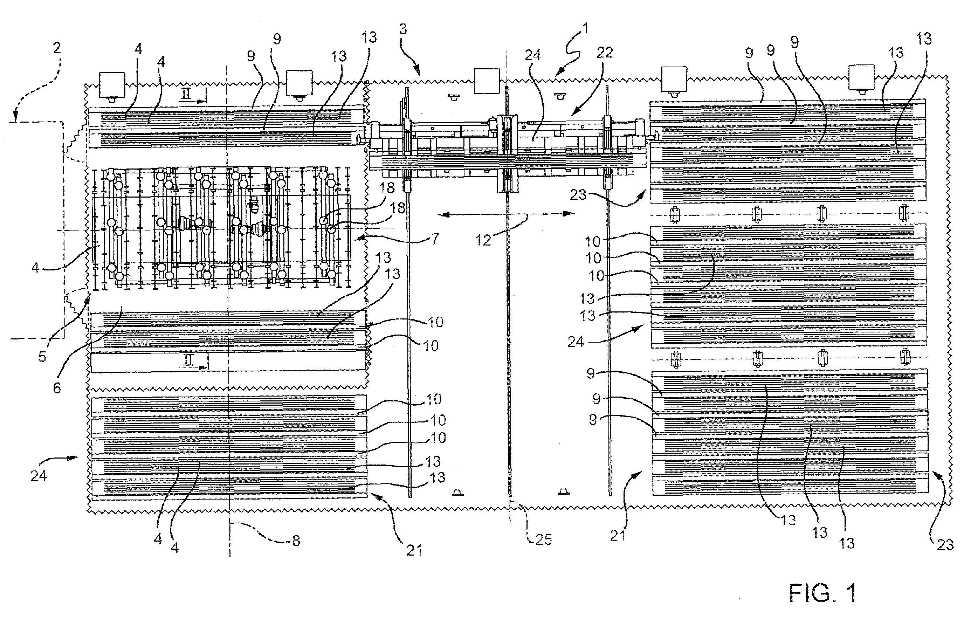

In figure 1, numeral 1 indicates, as a whole, the production plant for processing glass sheets.

In the specifically disclosed example, production plant 1 comprises a single sheet processing line 2 (known per se and not disclosed in detail), and a system 3 for feeding a sequence of glass sheets 4 to an inlet 5 of processing line 2.

System 3 comprises a station 6 for withdrawing and feeding sheets, in which inlet 5 of line 2 leads; in the specifically disclosed example, withdrawal station 6 houses a loading machine 7 which is mobile in opposite directions along a sheet transfer direction 8, a pair of mobile stands 9 and a pair of mobile stands 10 arranged along transfer direction 8 on opposite sides of loading machine 7.

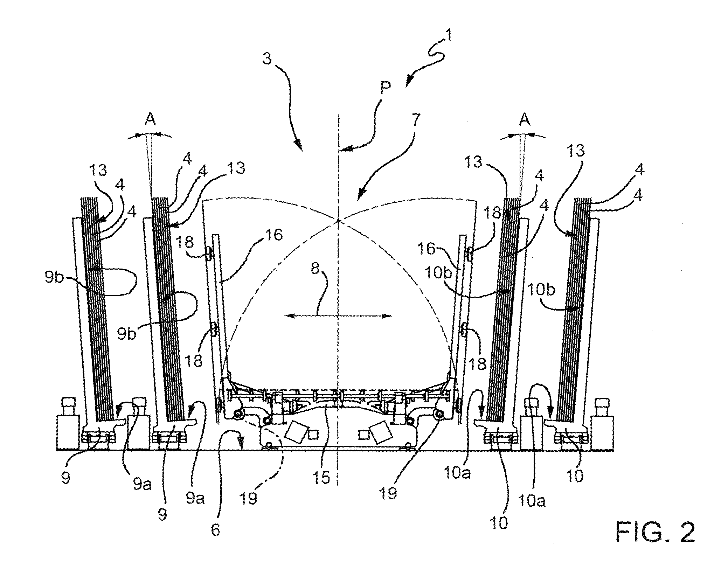

Stands 9 and 10 are mobile in a direction 12 orthogonal to transfer direction 8 and, as will be disclosed in greater detail hereinafter, can support respective packs 13 of sheets 4 arranged inclined and resting on corresponding bottom surfaces 9a and 10a and against respective side resting surfaces 9b and 10b (figure 2).

Again with reference to figure 2, side resting surfaces 9b and 10b face loading machine 7 and converge one towards the other and downwards forming with a vertical plane P orthogonal to transfer direction 8 respective angles A which are substantially the same and are about 85°.

Again with reference to figure 2, loading machine 7 comprises a motorised frame 15 translating in opposite directions along sheet transfer direction 8 and two side gripping members 16 each having a plurality of suction caps 18 which are coplanar to each other.

Side members 16 are hinged to opposite peripheral portions of frame 15 and are controlled independently of one another to rotate with respect to frame 15 about respective hinge axes 19 which are spaced from one another and parallel and orthogonal to transfer direction 8 between a lifted sheet withdrawal position (shown in figure 2) and a lowered sheet release position, shown in figure 1.

Again with reference to figure 1, system 3 further comprises a storage station 21 for the mobile stands with corresponding packs 13 of sheets 4 loaded thereon and a displacement unit 22 for stands 9, 10 from and towards withdrawal station 6.

Unit 22 comprises a motorised frame 24 which is mobile on corresponding guides in opposite directions along a handling direction 25 parallel to transfer direction 8 and comprises a motorised slide which is mobile in opposite directions orthogonally to directions 8 and 25 and adapted to couple in a known manner to stands 9, 10 to displace stands 9, 10 between stand storage station 21 and withdrawal station 6.

According to the invention, storage station 21 is subdivided in storage areas 23 each housing a plurality of stands 9 oriented like stand 9 arranged in withdrawal station 6 and in storage areas 24 for the storage of a plurality of stands 10 oriented like stand 10 also arranged in withdrawal station 6. The provision of distinct areas for stands oriented in the same direction considerably aids the transfer avoiding any error both during the gripping step of the carriages from station 21 and during the storage step in station 7.

Conveniently, as shown in figure 2, storage areas 23 and 24 and loading machine 7 are arranged on opposite sides along handling direction 25, while a storage area 24 is arranged along transfer direction 8.

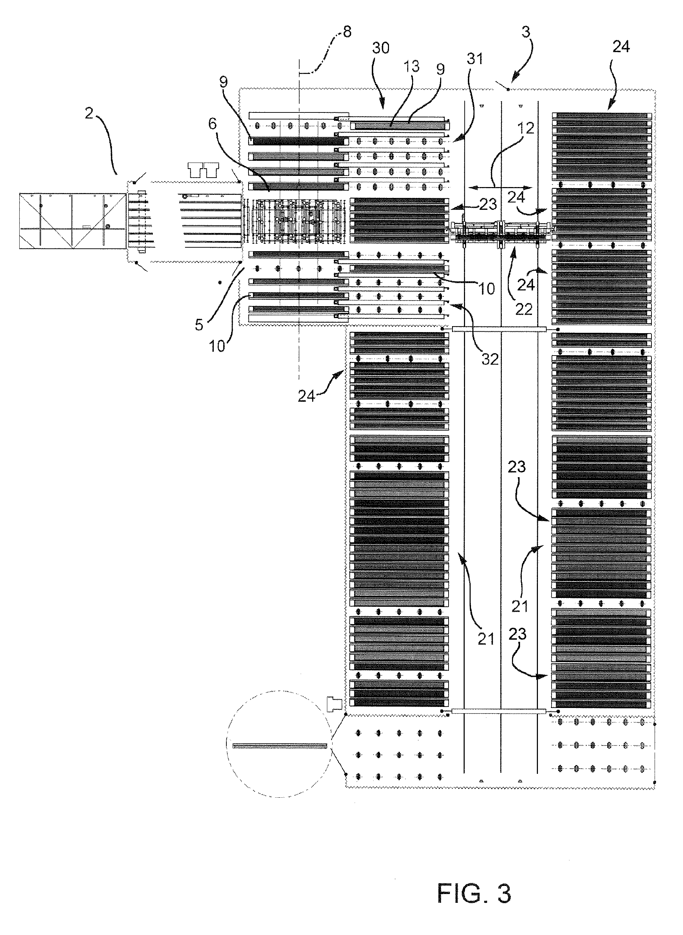

In the variant shown in figure 3, system 3 further comprises an intermediate stand storage unit 30 interposed between withdrawal station 6 and transfer unit 22; storage unit 30 is subdivided so as to have two areas 31 and 32, which are arranged on opposite sides of one of the cited storage areas 23 and house the first plurality of stands 9 and the second plurality of stands 10 oriented as the corresponding stands arranged in withdrawal station 6.

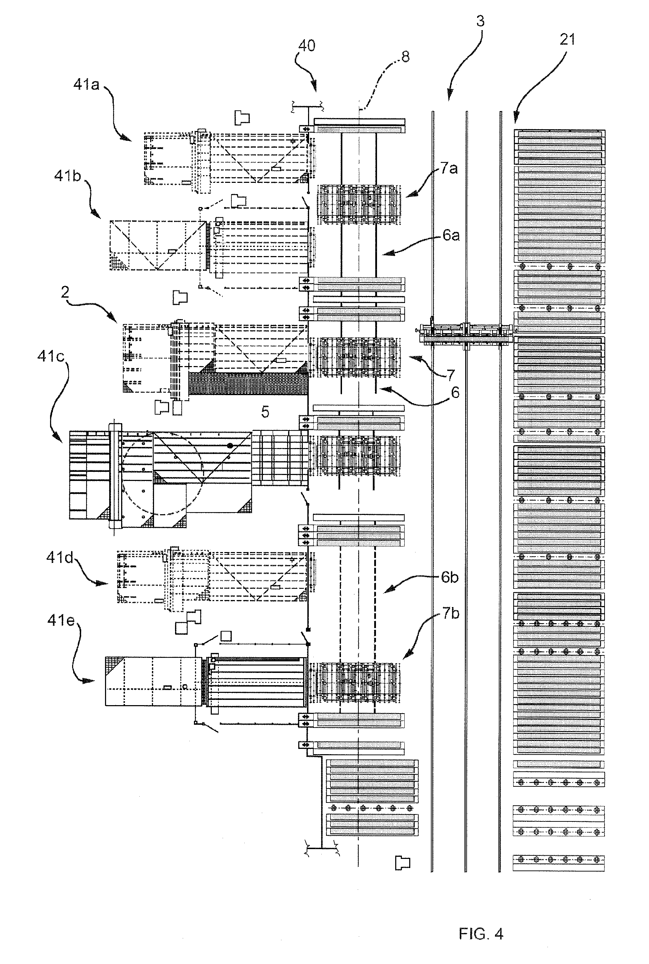

Figure 4 shows a production plant 40 that differs from production plant 1 mainly because, in addition to line 2, it comprises a plurality of additional lines, indicated by 41a-41e, (also known per se) which are arranged in a comb-like manner parallelly to direction 8. Lines 41a and 41b and lines 41d and 41e form two groups of lines each having a common sheet withdrawal station indicated respectively by 6a and 6b.

In each withdrawal station 6a, 6b, system 3 comprises a single loading machine 7a, 7b which is structurally equivalent to loading machine 7 and arranged again between two or more pairs of stands 9 and 10 which are spaced from one another along transfer direction 8 so that side resting surfaces 9b and 10b thereof are arranged always facing corresponding loading machine 7a,7b but on opposite sides of the inlets of corresponding lines 41.

As may be seen from figure 4, all withdrawal stations 6, 6a, 6b are fed by a single unit 22 which is common to all processing lines 2, 41 and therefore to all loading machines 7, 7a, 7b.

From the above, it is apparent that, independently of the number and type of processing lines, in each withdrawal station 6 the same loading machine can freely withdraw sheets from two different stands 9 and 10 which are specular to one another and independent of one another. Stands 9 and 10 may support sheets 4 which may be the same or may differ. In the first case, when the inlets of two distinct production lines lead to corresponding withdrawal station 6, such as in the case of stations 6a and 6b, both lines are fed with the same sheets allowing to freely increase the hourly production of items to twice as much; unlike the known solutions, however, the increase in productivity is obtained by using a single loading machine and a single feeding unit 22 that handles stands 9,10 independently of the geometry thereof and of the arrangement thereof in station 21. Thereby the costs for buying and amortising the feeding unit of the stands is distributed among all lines.

In the second case, depending on the type of desired product, the loading machine withdraws from one or the other stand 9 and 10 ensuring high flexibility, both in case of pairs of lines in parallel and especially in the case of the use of the single production line. In this case, as a matter of fact, the on-going production may be interrupted and/or stopped at any time so as to shift to another type of product obtainable from sheets other than those fed. The original production can later be re-established at any time. In addition, by appropriately controlling the line, different sheets can alternatively be fed and sequences of different products can be obtained in parallel.

Independently of the arrangement of the lines and of the type of sheets to be fed, the same lines may operate continuously as the withdrawal stations are fed continuously by a single feeding unit 22 independent of the lines.

The above said continuity is ensured by the special partitioning of storage station 21 in areas housing different stands and/or by the presence of storage unit 30, which provide a stock of stands 9, 10 in the close proximity of the withdrawal station and, in the presence of storage unit 30, immediately beside the sheet withdrawal station. These features ensure a great freedom in handling feeding unit 22.

The use of a single loading machine for one or more pairs of lines and a single unit for feeding stands and supplying the different withdrawal station allows to obtain different production systems with dramatically lower costs than those for the solutions used up to now.

From the above it is apparent that system 3 disclosed herein may be modified and varied by the person skilled in the art.

In particular, the loading machine and/or the transfer unit could be structurally different from what is disclosed. Different areas 23, 24 could also be arranged or distributed in storage station 21 in a manner other than disclosed.

## Claims

1. A system for feeding glass sheets to at least one sheet processing line; the system comprising a sheet withdrawal station; the withdrawal station housing support means for the sheets to be withdrawn and a loading machine mobile in a rectilinear transfer direction to withdraw the sheets from the support means and transfer them to the processing line, **characterised in that** said support means for the sheets comprise at least one first and at least one second mobile stand arranged along said transfer direction on opposite sides of said loading machine; said first and second mobile stand having a first and respectively a second inclined side resting surface of a respective sheet pack; said first and second side resting surfaces facing said loading machine and converging one towards the other and downwards; the system further comprising a storage station for storing mobile stands with sheets thereon and a single transfer unit for transferring said mobile stands between the storage station and said withdrawal station.

2. The system according to claim 1, **characterised in that** said storage station comprises at least one first storage area housing a plurality of said first mobile stands, and at least one second storage area housing a plurality of said second mobile stands.

3. The system according to claim 2, **characterised in that** in said first storage area said first mobile stands are arranged with the side resting surfaces thereof parallel to said first side resting surface, while in said second storage area said second stands are arranged with the side resting surfaces thereof parallel to said second side resting surface.

4. The system according to claim 2 or 3, **characterised in that** said transfer unit is mobile in opposite directions in a handling direction parallel to said transfer direction, and **in that** at least one of said storage areas and said loading machine are arranged on opposite side parts of said handling direction.

5. The system according to claim 3 or 4, **characterised in that** at least one of said storage areas is arranged along said transfer direction.

6. The system according to any of claims 2 to 5, **characterised by** further comprising an intermediate pack storage unit interposed between said withdrawal station and said transfer unit; in said intermediate storage unit, a portion of said stands having side resting surfaces thereof parallel to said first side resting surface and the remaining portion of said stands having side resting surfaces thereof parallel to said second side resting surface.

7. The system according to any of the preceding claims, **characterised in that** said first and second side resting surfaces form with a vertical plane orthogonal to said transfer direction respective identical angles.

8. The system according to any of the preceding claims, **characterised in that** said loading machine feeds sheets arranged side-by-side to two processing lines having respective sheet inlets adjacent to one another; said first and second side resting surfaces being distanced from one another in said transfer direction so as to be arranged on opposite sides of said inlets.

9. A production plant for processing glass sheets, the system comprising a plurality of sheet processing lines independent of one another and arranged in a comb-like manner and a system for feeding the sheets to the processing lines; the system being made according to claim 1 and comprising a single transfer unit for transferring mobile stands, which is common to all of said processing lines.
